# EUROPÄISCHE PATENTANMELDUNG

(11) **EP 1 273 855 A1**
(43) Veröffentlichungstag der Anmeldung: **08.01.2003**
(21) Anmeldenummer: 01113304.8
(22) Anmeldetag: 31.05.2001
(51) Int. Cl.: F24J 2/12, F24J 2/16, F03G 6/06, F03B 13/08

(54) **Multiples, solares-, Wärmepumpen--Pumpspeicher-Kombinations-Kraftwerk**

(71) Anmelder: von Hacht, Gerhard, Dipl.-Ing., 60598 Frankfurt/M. (DE); von Hacht, Christa, 60598 Frankfurt/M. (DE)
(72) Erfinder: Die Erfindernennung liegt noch nicht vor

(57) **Zusammenfassung**

Zur Erzielung höherer Wärmegrade bis zur DampfTemperatur werden "verdichtende" Solar-Hohlspiegel-Konstruktionen mit vielstufigen Wärmepumpen kombiniert, die die erzielbaren Wärmegrade potenzieren, so daß Temperaturen im Dampfbereich zur Verfügung stehen, die ausreichen, eine Dampfturbine zu betreiben. Nicht verbrauchter Strom wird benutzt ein Pumpspeicherbecken zu füllen, um in der Nachtzeit Stromreserven bereitzustellen.

## Beschreibung

Wie auf der Titelseite der Anmeldung schon zitiert, hat der Erfinder sich in den 3 genannten, früheren Offenlegungsschriften mit "verdichtenden" Solarkollektoren befaßt. Der Erfinder stellte aber damals noch nicht die Prüfungsanträge, weil er einmal mit seinen Überlegungen noch nicht zu der endgültigen Fassung seiner Erfindungsgedanken gekommen war. Zum anderen war er gerade in dieser Zeit vom Konkurs seines Arbeitgebers betroffen. Notgedrungen mußte er seine Erfindungs-Gedankengänge aus wirtschaftlichen Gründen zurückstellen.

Dennoch entstanden Notizen, die der Erfinder sorgfältig aufbewahrte, um zu einem späteren Zeitpunkt auf die Fortführung der Erfindungsgedanken zurückzukommen. Der Erfinder fand wieder eine Arbeit und er blieb bis zu seinem 65. Lebensjahr dem Beruf verbunden. Auch danach hatte er wenig Zeit sich der Fortführung der Erfindungsgedanken zu widmen. Erst jetzt im Jahre 1999, fand der Erfinder endlich genügend Zeit, die den Fortentwicklungs-Gedanken seiner 3 damaligen Erfindungen noch einmal wieder aufzugreifen und zu ende zu führen.

Die jetzigen Erfinder gehen auf diese Vorgeschichte ein, weil die Erfindungsgedanken zwar mit den 3 Anmeldungen der 3 Offenlegungsschriften begannen, aber noch nicht zu dem eigentlichen Denkprozess kamen, um aus dem damaligen Vorwissen bereits ein "echtes Solarkraftwerk" zu erkennen zu lassen, daß soviel Solarenergie verdichten kann um einen Dampfbetrieb mit nachfolgender Dampfturbine mit der nötigen Energie zu versorgen. In der geografischen Lage Deutschlands ist entscheidend, daß nur nach dem Prinzip der Verdichtung von Solarenergie ein "neues" Prinzip von "Solar-Kraftwerken" geboren werden kann.

Die einfallende Solarenergie-Menge pro qm ist eine Naturkonstante, jc nach geografischer Lage. Sie kann man nicht manipulieren. Um einen Energieträger, Wasserdampf, für den Betrieb einer üblichen Dampfturbine aufzubereiten, wobei man sich der Solarenergie bedienen will, wird nur möglich indem man die Solarwärme verdichtet. Eine Verdichtung der Solarwärme ist nur durch optische Linsen oder Hohlspiegel möglich, wobei bei ersteren sich nur Stablinsen eigneten und Für die letzteren, Hohlspiegelrinnen machbar erweisen. Beide Bauweisen sind nur unter erheblichen Kosten-Aufwendungen verwirklichbar. Es mußte nach einer Konstruktion gesucht werden, die einfach und kostengünstig herstellbar ist. Die Erfinder fanden einen "dritten" Weg der Verdichtung. Das "übereinander-projizieren" durch Spiegelumlenkungen!

Um eine solche Konstruktion zu beschreiben, gingen die Erfinder von den, in den genannten Offenlegungsschriften dargelegten Gedanken aus. Es erleichtert die nachfolgende Beschreibung des "neuen" Solarkraftwerks-Prinzips am Beispiel der vorausgegangenen Erfindungs-Vorgedanken verständlich zu machen. Bei den, in den Offenlegungsschriften fixierten erfindungs-Gedanken handelt es sich noch nicht um Patentansprüche für den "Bau eines Multiplen Solar-, Wärmepumpen-, Pumpspeicher-, Kombinations-Kraftwerkes", sondern lediglich um Erfindungs-Gedanken für "Solar-Kollektoren" und diese für einen Einbau in Hausdächer.

Wer also die beim lesen der nachfolgenden Erfindungbeschreibung noch nicht die Funktion erkennt, kann sich anhand der Offenlegungsschriften besser nach-orientieren.

### ERFINDUNGS-BESCHREIBUNG

### Vorbemerkungen

In der **Fig**. 1 ist ein Solarkollektor zeichnerisch im Schnitt dargestellt. Er besteht aus 2 Platten (**2**), die in einem Winkel von 90 Grad aneinander gesetzt sind. Auf den zuwandten Seiten der Platten (**2**) sind plane Spiegelflächen (**1**) angeordnet. Auf der linken Platte ist ein Absorber dargestellt, der aus 2 Glasscheiben (**3** und **5**) besteht und dessen Innenraum (**6**), von dem Absorberkreislauf (**8**) durchflossen wird. In der Mitte des Innenraums befindet sich eine Wärmeprallplatte (**3**), die durch über Spiegel umgelenkte und herangeführte Solarstrahlung erhitzt wird. Wesentlich bei diesem Prinzip ist die Führung der Solarstrahlung zum Absorber (**3**, **5**, **6**). Da plane Spiegel benutzt werden gelangt die Solarstrahlung auf 4 unterschiedlichen Wegen, bezeichnet mit (A, B, C, D) zum Absorber. Es fällt auf, daß alle 4 Strahlungswege auf die beiden Seitenwände des Absorbers umgelenkt werden und dadurch eine "Verdichtung" bewirken!

Der Absorber hat 2 Glasscheiben (**5**) als Seiten-Außenwände, zwischen denen sich in einigen Millimetern Hohlraum-Abstand die Wärmeprallplatte (**3**) befindet, auf die die Solarstrahlung beidseitig auftrifft. Die Platte (**3**) wird erwärmt und erhitzt und gibt die Hitze an die, den Hohlraum (**6**) durchfliessende Wärmeträger-Flüssigkeit weiter, die zu einem Heizungskreislauf führt.

Wichtig ist den Weg der Solarstrahlung in den 4 Wegen A, 5, C, und D zu verfolgen. Es sind 4 Strahlungs-Wege, die Solarwärme auf die Absorberseiten führen. Der Absorberkörper hat nur diese 2 Seiten-Fenster (**5**), die wesentlich kleiner sind, etwa halb so groß, (beidseitig) als die Plan-Spiegelfächen (**1**) es sind, was die Verdichtung der Strahlung 1 : 3 herbei führt.

Nimmt man zum Beispiel an, daß die Planspiegel einen Quadratmeter Fläche haben, dann wird ein qm aufgefangene Solar-Energie auf eine halb so große Fläche projiziert, und da Weg A und B auf dieselbe Seitenfläche (**5**) des Absorbers geführt wird, tritt eine Verdoppelung der Strahlungsmenge ein. Das gleiche geschieht auf der zweiten Seite in den Strahlungswegen C und D.

Summiert man die beidseitig, eingefangene Solar-Energie, so vervierfacht sich die Fläche, aber nicht die Strahlungsmenge. Da die Planspiegel **45** Grad schräg zur Sonne stehen, verringert sich die eingefangene Strahlungsmenge auf den Faktor **3**. Daraus ergibt sich eine dreifache Strahlungverdichtung!

Aus diesem in den Offenlegungsschriften beschriebenen Bau-Prinzip kann man folgern:
dieses aus 2, in einem Winkel zu 90 Grad zueinander stehenden Planspiegeln bestehende Bauprinzip bei dem die Strahlung auf einem halb so großen Absorber übertragen wird, ermöglicht eine Verdichtung der Solar-Energie um das Dreifache.

### BESCHREIBUNG DES NEUEN SOLAR-KRAFTWERKES

Auf diesem Auffang-Prinzip, daß der damalige und jetzige Erfinder in den o. a. Offenlegungsschriften schön erläutert hat, baut sich nun ein völlig neues Bauprinzip eines Solar-Kraftwerkes auf, das nachstehend beschrieben wird.

Zum Auffangen der Solar-Energie wird das schon geschilderte Grundprinzip von 2. im Winkel von 90 Grad zueinander stehenden Planspiegeln benutzt, daß Solarstrahlung in 4 Auffangwegen A, B, C, D auf einen halb so großen Absorber lenkt, der senkrecht auf der Mittellinie einer der beiden Spiegelplatten angeordnet ist.

In nachfolgenden Beispiel angewendet auf eine Einfangfläche von 1,5 × 1 Meter, was 1,5 qm Fangfläche ergibt, kann man mit Hilfe von 2 Planspiegeln mit einer Fläche von je ein qm, die man im 90-Winkel zueinander stellt, eine Verdichtung der Solarwärme um das dreifache erzielen, Beträgt der Solarwärme-Einfall beispielsweise 600 Watt pro m², so erzielt man beim unserem Beispiel 1,8 KW/m² am Absorber, der diese Wärme an eine Wärmeträger-Flüssigkeit weitergibt. Dieses Grundprinzip wird nun die Basis zu einem echten Solarkraftwerk, daß nachfolgend beschrieben wird.

### DER WEG ZUM ECHTEN SOLAR-KRAFTWERK

Mit einer Anzahl von Solar-Kollektoren dieses Grund-Prinzipes kann man ein Dach eines Wohnhauses oder eine Fabrikhalle versehen, oder eine Freiland-Anordnung ausführen. Um jedoch ein Solar-Kraftwerk größerer Leistung, etwa ab 1 MW und höher zu erzielen, muß man schon eine große Kette dieser 3fach verdichtenden Kollektoren zusammenfügen. Man kann sich leicht ausrechnen, daß selbst bei einer Anordnung auf dem Freiland, eine größere Land-Aufstell-Fläche für die 3fach-verdichtenden Kollektoren benötigen wird, um ein MW Leistung zu erreichen. Man muß also eine "neue" Bauform finden, wie man man unter Verwendung des 3fach verdichtenden Prinzip:
a) durch hintereinander folgenden Reihenanordnungen so zusammenfügt, daß
b) eine weitere Addition der Verdichtung der Solar-Energie zustande kommt, damit Solar-Energiemengen über ein MW Leistung daraus gewonnen werden kann; um das gewünschte Endergebnis, ein solarbetriebenes 1 MW-Kraftwerk zu bekommen.

Aus dem Kollektor-Bauprinzip ging bereits hervor, daß man mit einfachen Planspiegeln, wenn man sie richtig zueinander anordnet, mit einer einfach zu bauenden Konstruktion eine Verdichtung von 1: 3 erreichen kann.

In der Praxis wird die Wärme bei einer Einzel-Fangflächengröße in den Abmessungen von 1,5 × 1,0 m² bei Solareinfall von 600 Watt/m² in den Sommermonaten, eine Wärmemenge von 1,8 kW/m² und Stunde erzielen können.

### Solarkraftwerk in Groß-Plattenbauform

Um 1 Megawatt elektrischer Leistung zu erreichen müssen wir 556 der Einzel-Fangflächen, nennen wir sie "Zellen", von je 1,8 kWh Leistung zu einer größeren, gemeinsamen Auffangfläche zusammen bauen. Da die Einzelfangfläche (Zelle), 1,5 m² aufweist, beträgt die Zahl der notwendigen Einzelflächen, 556 Stück, die man, um große Bau-Höhen zu vermeiden, mehr in die Breite gehend, also in einer liegenden Rechteckform. anordnen wird.

Da die Fläche der Einzelzelle 1,0 × 1,5 m, beträgt, kann man für die Höhen, ein Meter rechnen und für die Längen dagegen 1,5 m-Einheiten.

Bezeichnen wir diese Wärmefang-Fläche von 1.5 m², als unsere Grundfang-Spiegelzelle (GZ). Um zu unserem Ziel, eine Leistung des Solar-Kraftwerkes von "einem MW" elektrischer Leistung zu kommen, wird man bei 20 m Höhe, zu 20 Zellen von 1 m breiten und in der Länge bei 1,5 m längen Spiegel-Zellen-Einheiten auf. der rechteckigen Plattform wegen auf insgesammt 600 Spiegelzellen-Einheiten zu einer Länge von 30 Metern der Spiegelplattform kommen.

Das ergibt bei 600 Spiegelzellen in der Summe 1.8 KWh × 600, genau die erwünschten 1.080 MW Leistung.

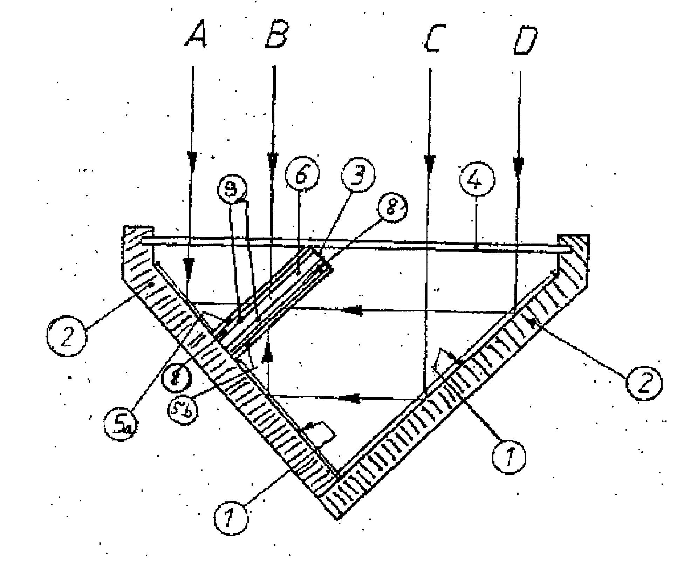

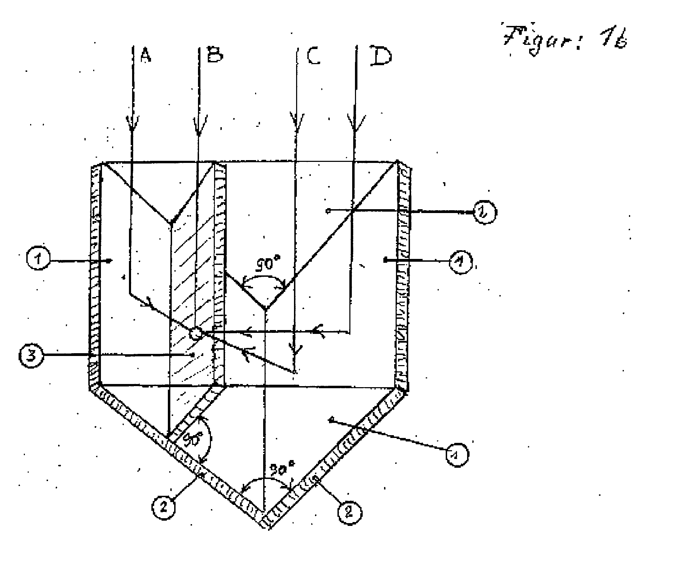

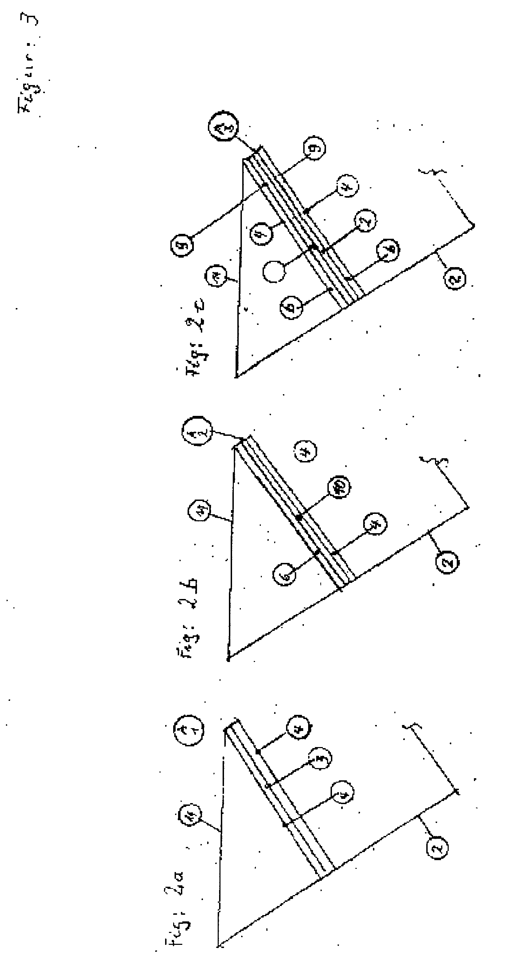

Eine Reihenanordnung dieser Bauweise ist in **Fig.** 2 dargestellt. Es erscheint zunächst nicht maßgeblich, ob die 600 Einzelzellen zu einem Rechteck oder zu einer "etwa-Rundspiegelform" zusammengebaut werden (**Fig.** 3a und 3b). Dennoch sind andere Bauformen machbar die, wie wir später erkennen werden, sogar eine Steigerung der Leistung der vorerrechneten Werte ermöglichen. Doch bleiben wir zunächst bei der Bauform: Plattenwand, die in einigen Fällen die einfachere Lösung sein wird und deshalb nicht unbeachtet bleiben sollte.

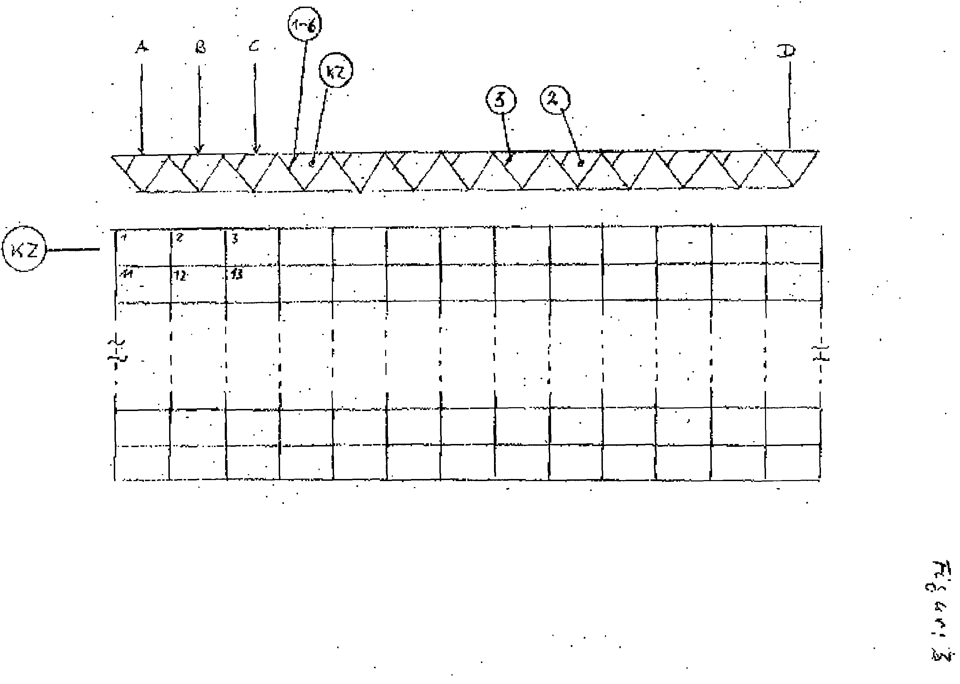

Eine Plattenkonstruktion ca. 1,5 Meter tief mit einer Höhe von 20 Metern und einer Breite von 30 Metern läßt sich auf einem auf einem Gestell drehbar zum Sonnen-Einfallswinkel und zur Strahlungseinfallsrichtung je Tages-Sonnenstand nach führen. Das kann auf einem Boden-Karussel (**Fig.** 4) erfolgen, wobei die Zellenplattform zum Einstrahlwinkel zwischen 20 und 60 Grad zur Waagrechten, nachkippbar aufgehängt wird und der Rahmen mittels Radgestell auf einer runden Gleisbahn dem Sonnen-Tagesverlauf nachgeführt werden kann.

Die 600 Einzel-Spiegelzellen sind bei der vorangehenden Betrachtung auf Grundmaße von: Höhe = 1 m/Breite = 1,50 m und einer Tiefe von 1 m bezogen. Die Einzelzellen sind handlich und lassen sich leicht zu einer Plattform von H: 20 M, Länge 30 m und Tiefe = ca. 1.5 m vor Ort zusammen bauen. Jedoch die Zahl der Einzelzellen ist beachtlich und so sollte man zu einem größeren Einzelmaß der Zellen kommen, die aber noch transport-freundliche Abmessungen für einen LKW-Transport aufweisen, um die Zahl der notwendigen Transport-Fahrten zur Baustelle zu begrenzen.

Deshalb sollten die Spiegelzellen auf eine Höhe von 2 m, einer Breite von 3 m, und einer Tiefe von ca. 1,5 m, vergrößert werden. Dadurch senkt sich die Zahl der Reihen auf 10 Zellen für die Höhe und bei der Länge der 3 m-Einheiten ebenfalls auf 10 Längenabschnitte.

Um eine Plattform mit den Außenmaßen von 20 × 30 Metern zu montieren, müssen nun nicht mehr 600 Einheiten zur Baustelle des Solar-Kraftwerkes transportiert werden, sondern nur noch 10 für die Höhe und 10 für die Länge, also 100 Stück. Wenn man von einer Bautiefe der Einzelzellen von 1,5 m ausgehen kann, können bei einer Bauhöhe vom 3 m, jeweils 3 Stück nebeneinander, und wenn die LKW-Ladefläche eine Länge von ca. 7 Metern hat, jeweils 6 Einzelzellen pro Ladung transportiert werden.

Wird ein Anhänger vom LKW mitgezogen, auf dem abermals 6 Einheiten transportiert werden, können pro Führe 12 Einheiten gefahren werden. Die Zahl der Fahrten pro 20 × 30 m-Spiegelplattform beschränkt sich, anderes Material ausgenommen, auf ca. 10 Fahrten. Man erkennt, daß kein Transport-Problem vorliegt.

Die Erfinder möchten darauf hinweisen, daß sich eine solche Bauform, die er noch als "Solar-Klein-Kraftwerk" sehen will, sich zu einer hervorragenden Kombination mit einem Klein-Wind-Kraftwerk eignet. Im den Sommer-Monaten April bis September liefert das Solar-Kleinkraftwerk den Strom, in den Wind-Monaten: Oktober bis März, das Windkraftwerk den Strom. Man erkennt, daß Landwirte, die über große Flächen verfügen, ihre landwirtschaftlichen Verluste über ein Strom-Lieferungs-Konzept ausgleichen können. Ein Rest verbleibender Landwirtschaft und Tourismus gleicht die Löcher zwischen beiden Stromgewinnungsarten aus.

Ein solches Solar-Kleinkraftwerk benötigt eine Stellfläche von. ca. 40 × 40 Metern = 1.600 qm. Da Bauern meist über größere Flächen verfügen, können sie an den Bau von mehreren Kleinkraftwerken denken und kommt so auf Leistungen von 5 oder gar 10 Megawatt, die dem Bedarf einer Kleinstadt entsprechen. In diesem Bereich wird bei einer Kombination von Wind- und Solar-Kleinkraftwerken für manche Kleinstädte sogar eine Eigen-Stromversorgung interessant, die der Kleinstadt Einnahmen bringt.

Nicht immer entnehmen die Verbraucher viel Strom aus dem Netz und es fällt ein Überschuß von Leistung an, der nicht ungenutzt bleiben sollte. Wohl dem Bauer oder Kleinstadt die über Berghänge verfügt. Man stellt dann Solar- und Windkraft Werk oben auf den Berg, und legt unten ein Regenwasser-Sammelbecken an. Oben auf dem Berg wird das Wasserspeicherbecken angelegt und man verbindet beide zu einen Pumpspeicher-Kraftwerk, das sich am unteren Becken befindet. Geht kein Wind und scheint auch keine Sonne, so kann mit Hilfe des Überschuß-Stromes, das Wasser des oberen Beckens dazu benutzt werden, eine Wasserturbine anzutreiben, wobei das über die Turbine herabfließende Wasser in das untere Becken zurückfließt. Es kann wenn wieder Überstrom-Leistung anfällt, zum oberen Becken hochgepumpt werden.

Das kleine Pumpspeicherwerk wird dann eingesetzt, wenn Solar- oder Wind-Strom-Erzeugung pausieren müssen. Die zum oberen Becken hochgepumpten Wasser-Vorräte werden zur Überbrückung von Mangelzeiten im Solaroder Windbereich eingesetzt. So kann eine Lücken-Versorgung sicherstellen.

Außerdem verbleibt noch die weitere Möglichkeit Akkumulatoren zur Stromspeicherung zusätzlich einzusetzen.

Ein Bauer in günstiger Landlage kann ähnlich, wie ein Bergbauer an den Bergbächen in Deutschlands Süden, Stromlieferant, sein und gleichzeitig eine Mühle oder einen anderen Betrieb mit Energie versorgen. Zahlreiche Kleinbetriebe besitzen noch aus früherer Zeit eine Flußlage, weil sie früher ihre Maschinen mit Wasserkraft antrieben und es wird sich künftighin die Frage stellen, ob sie unter Benutzung moderner Technik die vorhandenen Naturkräfte auf ihrem Grund und Boden nicht wieder - öko-umweltfreundlich - nutzen sollten. Außerdem eignen sich die oberen und unteren Auffangbecken noch als Badeseen für Sommergäste oder für die Fischzucht. Zumal die Weltmeere überfischt sind und der Fischfang auf den Meeren zurückgeht.

### Der WEG ZU EINEM SOLAR-GROSS-KRAFTWERK

Wie schon im voran gegangenen Kapitel dargestellt, kann nan die rechteckigen Spiegelzellen so aneinander setzen, daß sie der Form einer mosaikartigen-(Spiegel-)Platte gleichen. Die **Fig.** 3 zeigt ein solches Beispiel. Montiert man die Einzelzellen an ihrer V-schmalen Seiten aufeinander, so daß die Spiegelflächen lückenlos aneinander gereiht werden, so entsteht eine lange Spiegelrinne (SR). Was man übrigens auch schon bei dem Solar-Kleinkraftwerk machen wird. Es entsteht dann, wenn diese Reihen aufrecht und senkrecht nebeneinander gestellt werden, bei einer Höhe von 20 Metern, eine senkrecht, stehende, durchgehende Spiegelrinnen-Wand von 30 m Länge.

Im Prinzip ist ohne Schwierigkeiten möglich, solche Spiegelrinnen nicht nur mit einer völlig geraden Rinnenform herzustellen, sondern auch in Ringform mit einem V-förmigen Querschnitt. Allerdings sind dann nicht mehr plane, einfach herstellbare Planspiegel verwendbar. Die Spiegel bekommen eine bogenförmige Form, die nur maschinell gepresst werden können und bedingen einen Arbeitsgang mehr in der Herstellung.

Damit wird das alte, vorherige Bauprinzip verlassen und nun kommt es zu einer absolut, völlig neuen Baukonstruktion. Die Spiegelzellen-Kasten-Bauform fällt weg.

An ihrer Stelle treten Spiegelrinnen (-SR), die aber - wie vorher - Absorber (**1**a-**1**b) auf einer der beiden Spiegelrinnenwände (**5**-SRW) besitzen.

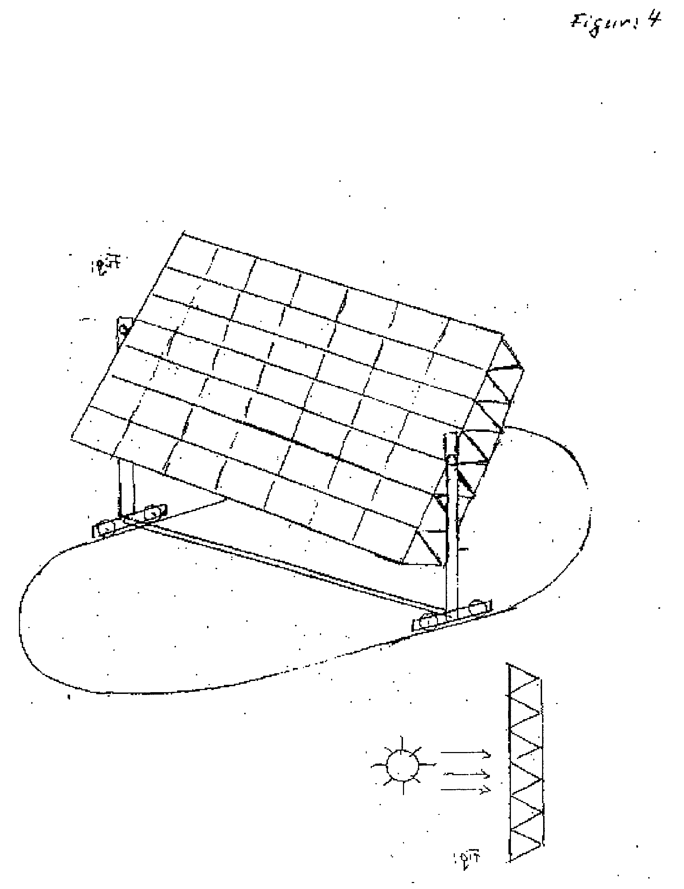

In **Fig.** 5a bis 5c. sind, solche Spiegelringe dargestellt. Will man eine größere Spiegel-Plattformen in runder Form anfertigen, wird man in der Spiegelmitte (**5**-SM) mit einem kleinem Ring in der Mitte des Spiegels anfangen und legt die weiteren, Ring für Ring um den Mittelpunkt an, wobei die Ringe im Durchmesser von Schritt zu Schritt immer größer werden. **Fig.** 5 zeigt einen Schnitt durch eine solche, runde Hohlspiegelplatte größeren Durchmessers.

### Absorber (Fig. 2a bis 2c)

Die Absorber, die auf einer der Spiegelflächen - meist in den Figuren auf der linken Spiegelfläche, aufgesetzt sind, können in verschiedenen Bauweisen ausgeführt werden.
a) Im einfachsten Fall besteht der Absorber (**1-3, 1-6**) aus einem Rahmenkasten **(1-2)** mit einer Glasscheibe, mit einem Zu- und Abfluß, in dessen Mitte eine Wärme-Prallplatte (**1-3a**) an geordnet ist, die die Sonnenwärme an das durchfließende Wärmeträgermedium (**1-6**) abgibt.
b) Die Wärmeprallplatte (**1-6**) in der Mitte kann durch 2 Glasscheiben (**1-3a**) ersetzt werden, die auf ihren zugewandten Seiten mit Dünnschicht-Solarelementen (**1**-ELM) versehen sind, sodaß die Solarwärme einmal durch Berührungs-Kontakt über die äußeren Glasscheiben (**1**-5a + 5b) an das Wärmeträgermedium abgegeben wird und anderseits durch die Dünnschicht-Solarelemente (**1**-ELM) im Absorber zugleich auch direkt elektrischer Strom erzeugt werden kann.
c) Schließlich ist es möglich den Absorber, wie ein "Flüßigkeits-LASER-Resonator (Fabry-Perot-Resonator-Prinzip) auszuführen, sodaß Solarelemente im Wellenlängen-Resonator-Abstand im Rahmen des Absorberkastens angeordnet werden, und zwar so, daß eine "stehende" Resonationsschwingung eintritt. Der LASER-Flüssigkeit wird über die Breitseiten durch die Glasscheiben die Solarenergie zugeführt und regt sie zum Leuchteffekt an. Die leuchtenden LASER-Flüssigkeit wird in der Wellenlänge so abgestimmt, daß sie zum Schwingen kommt, wobei die Photonen-Schwingungen in der LASER-Flüssigkeit auf die im Rahmenteil angeordneten Solarelemente auftreffen, die zugleich als Wellenlängen-Abstimmplatten wirken, aber auch zugleich als elektrische Stromerzeuger wirken.

Man sollte sich vor Augen halten, daß den Solarelementen bereits optisch-schwingende Strahlung, also schwingende Photonen, zugeführt werden, die den Photonenfluß durch die LASER-Resonanz anregen werden, was die Photonen-Ausbeute und Zahl über an sich bekannten Wirkungsgrade hinaus, steigern werden. Wie weit sich die Photonen-Bewegungen pro Flächeneinheit dadurch steigen lassen, können erst Versuchsreihen ergeben. Es ist aber zu erwarten, daß ein Anstieg der Photonen-Bewegungen im Photo-Elementmaterial in Richtung einer erheblichen Verbesserung zu erwarten ist.

Zu bemerken ist, daß eine solche, gleichzeitige Nutzung bislang noch nicht in der wissenschaftlichen Literatur beschrieben wurde, was verständlich ist, denn niemand sah für eine solche Kombination bisher eine sinnvolle Verwendung. Das ändert sich jedoch sofort, wenn man eine Anwendung. vorhat, wie in der vorstehend, beschriebenen Erfindung geschildert wird.

Es wird erkennbar, daß der hier beschriebene Effekt bedeutend ist, nicht normale Sonnen-Photonen auf das Elementmaterial einwirken zu lassen, sondern Solar-Photonen die man zuvor in einer LASER-Flüssigkeit zum Schwingen angeregt hat, sich vervielfältigen. Das aber kann nur über eine optischschwingende Flüssigkeit erfolgen. (zu bemerken ist, daß der Erfinder zu 1. (G. von Hacht) erst darauf kam, als er zum erstenmal diesen Vorgänge in der Offenlegungsschrift: P 25 25 630.8, solche Vorgänge andachte, aber im Detail noch nicht veröffentlichte. Dort wurden zwar optische leuchtende Flüssigkeiten in Glasrohren beschrieben, jedoch nicht die jetzige, geplante Verwendung eines 3-dimensional schwingenden optischen LASER-Resonators als Absorber-Eigenschaft erstmals vorsah. Solches wird in dieser, vorliegenden Anmeldung erstmals hier beschrieben.

### Hohlspiegel-Solar-Kraftwerk

Man kann, wie vorstehend beschrieben, die Kollektorzellen statt in einer planen Plattform, auch in Ringen anordnen.

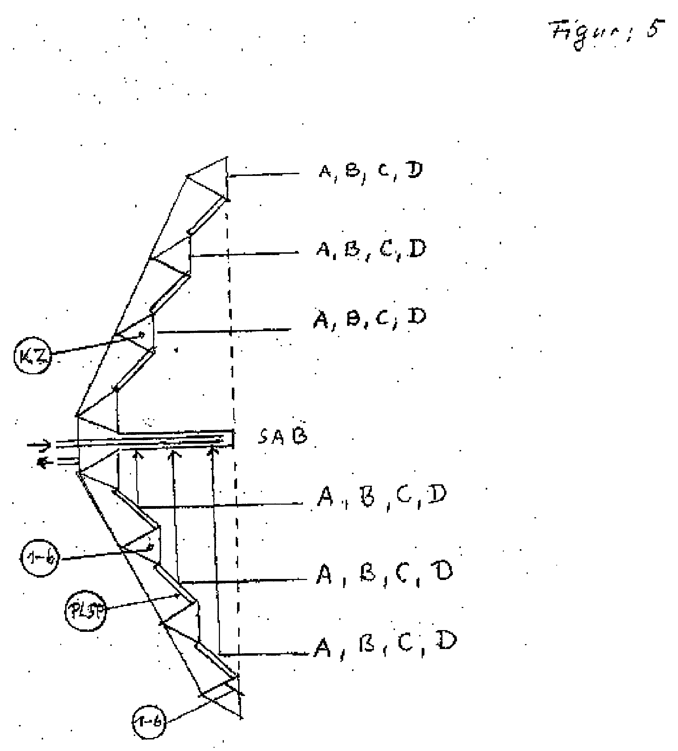

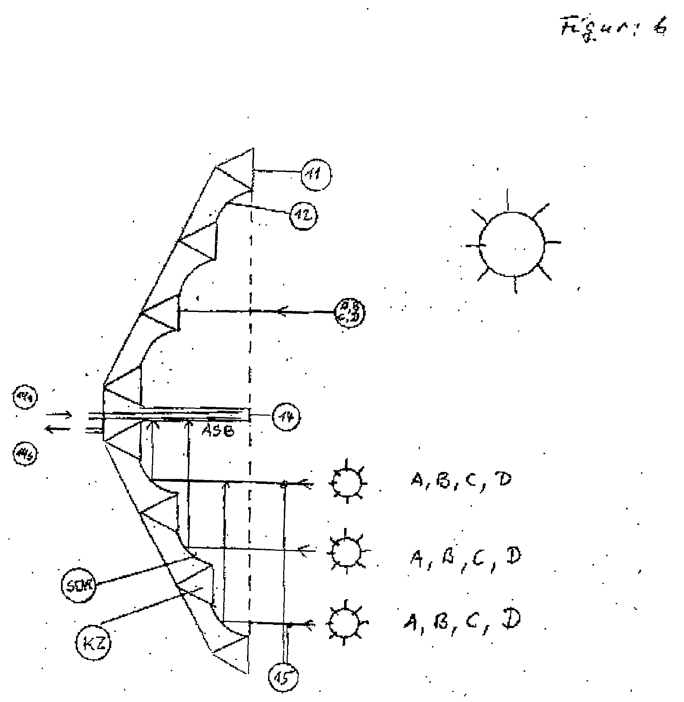

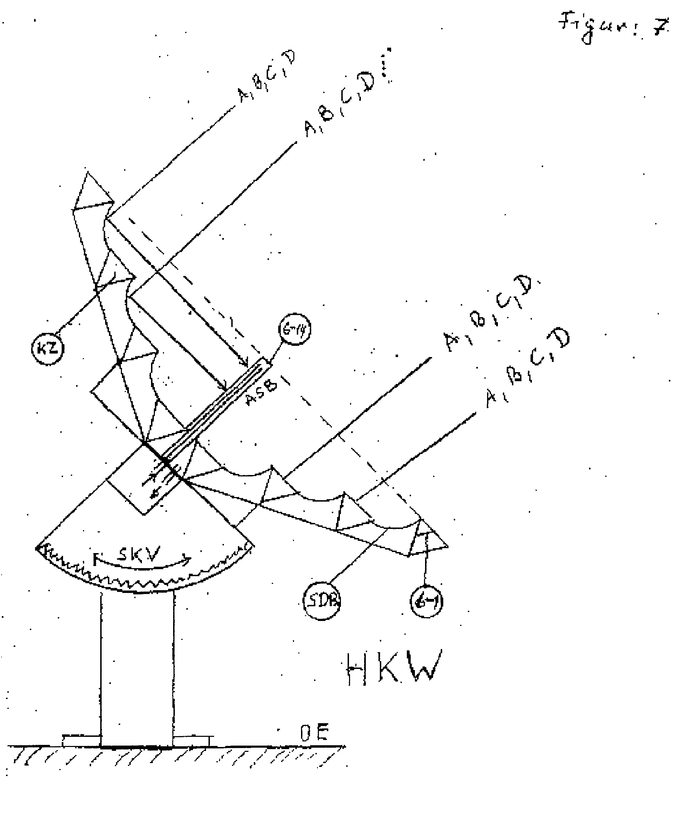

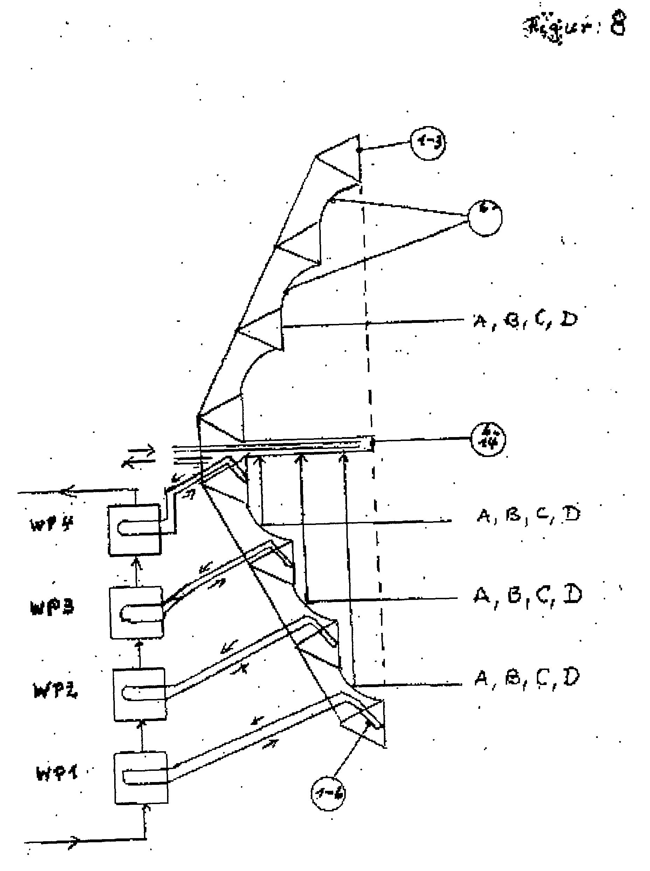

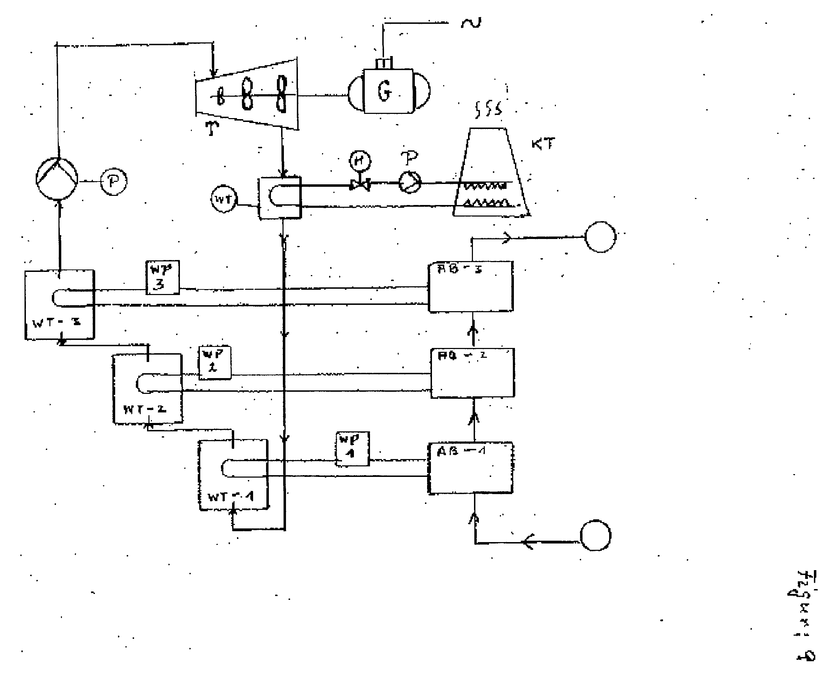

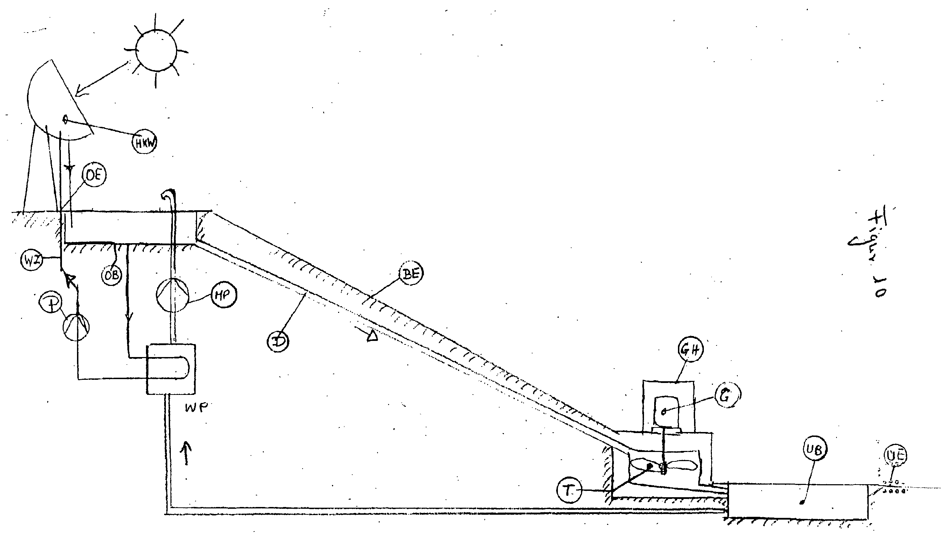

Jedoch ist auch möglich die Ringe in der Höhe zu staffeln sodaß ihre Anordnung, eine Hohlspiegel-Form ergibt. Dadurch entsteht ein stufenförmiger Hohlspiegel. Weiterhin kann man die Ringe zusätzlich einem Brennpunkt zuneigen, wie dies in **Fig.** 6-11, 6-12 gezeigt wird. Die Sonnen-Strahlung wird dadurch in zweifacher Form konzentriert:
a) in den V-förmigen Spiegelringen mit Verdichtungs-Faktor 1: 3 und b) im Brennpunkt des Hohlspiegels,
wobei die Sonnenstrahlung, Ring für Ring im Brennpunkt des Hohlspiegels übereinander projiziert, also verdichtet wird. In der Mitten-Achse des Hohlspiegels, in der Brennpunkt-Linie, wird man einen säulenartigen, stab-förmigen, zusätzlichen Absorber (6-14 anordnen, der die von den Hohlspiegel-Ringen noch zurück- und weiter gespiegelte, verbleibenden Strahlung, soweit sie nicht schon in den Spiegelrinnen völlig ihre Wärme abgeben haben, weiter genutzt und nun zusätzlich verwertet werden.

Die Wärmeträger-Flüssigkeit durchfließt diese stabförmige Absorbersäule von der Innenachse her und die nacherhitzte Wärmeträger-Flüssigkeit verläßt sie wieder im Außenmantel-Sereich, wie dies in **Fig.** 6 dargestellt wird. Im Prinzip hat der Hohlspiegel nun die zusätzliche Aufgabe eines "Nacherhitzers" im umlaufenden Wärmemediums-Kreislauf (WKL) übernommen.

Die Wärmeträger-Flüssigkeit WKL wird zuerst durch die konzentrischen Ringe **6-11** geleitet und durchfließt in der Endphase dann den in der Mitte des stufenförmigen Hohlspiegel **6-14a, 6-14b** angeordneten säulenförmigen, zusätzlichen "Brennpunkt-Absorber" (**6-14**)!

Weiterhin kann man zwischen den treppenartig, gestaffelten Spiegelringen mit 3facher Verdichtung und Absorber, noch Ring-Hohlspiegel "ohne Absorber" zwischenfügen, sodaß auf jeweils einen Spiegel-Wannenring **(6-12),** im Wechsel, ein ganz normales Ring-Hohlspiegel-Segment (**6-16**) folgt, wie dies in **Fig.** (6-) dargestellt ist. Dieses zwischengeschaltete Ringspiegelsegment lenkt die Solarstrahlung A, B, C, D auf den Mitten-Absorber (**6-14**).

Unter diesen Voraussetzungen wird man eine weitere Verbesserung vornehmen, indem man die Ringe nicht als "Stufen-Ringe" ausführt, sondern in einem einem einzigen schneckenförmigen Ring, wie die **Fig. 6** es zeigt. Der Schneckenring beginnt am unteren, äußeren Spiegelrand und schraubt sich dann bis zu zur Spiegelmitte zum Mitten-Absorber **6-14.**

Die Wärmeträger-Flüssigkeit strömt am unteren Außenrand des Hohlspiegels an seinem tiefsten Punkt am äußeren Spiegelrand über der Erde ein, durchfließt die schneckenförmig, gewundene Spiegelrinne und kommt schließlich und endlich im Brennpunkt **6-14** des Spiegels an, wo die Wärmeträger-Flüssigkeit WKL noch von der übrigen Brennpunkt-Absorber-Hitze eine weitere, letzte "Nacherhitzung" bekommt und eine weitere Steigerung in der Leistungssteigerung im WKL herbeiführt.

Selbstverständlich kann bei dieser Ausführung nach der geschraubten Schnecken-Spiegelrinne mit Absorber auf der eine Spiegelfläche, eine ebenso geschraubte Schnecken-Spiegelrinne, letztere nicht aus planen Plattenspiegelflächen **(5-2)** sondern als Parabol-Hohlspiegelrinne **6-12** ohne Absorber, im Wechsel anordnen.

Die geschraubten Parabol-Spiegelrinnen **(5-2)** werden mit ihrem Brennpunkt auf die Mitten-Absorbersäule (**6-14**) direkt ausgerichtet. Die sind die Wärmequelle für die Nacherhitzung.

In den Absorbern der winkelförmigen Spiegelrinnen nach **Fig.** (6-11) befindet sich die schon beschriebene Prallplatte (**1-3**) oder andere beschriebene Absotber-Einbauten. Man kann sie mit einer schwarzen Oberfläche versehen, die dann gut die Solarwärme an die Wärmeträger-Flüssigkeit WKL abgibt.

Im vorliegenden Fall der Verwendung eines "Nacherhitzers" bei einer Schnecken-Spiegelform wird man jedoch diese Mitten-Prallplatte nicht als schwarze Oberfläche ausführen, sondern mit einer spiegelnden Oberfläche versehen, um die noch freie Strahlung zum Brennpunkt-Absorber (**6-14**) in der Spiegelmitte zu leiten.

Man kann aber auch anstelle der Prallplatte elektrische Solar-Elemente verwenden. Damit diese rückspiegeln sollte man ein Oberfläche aus hitzefestem, (Jenaer) Glas verwenden. Am günstigsten ist, wenn man 2 hitzefeste Glasscheiben verwendet, auf die Dünnschicht-Fotoelemente aufge-dampft sind. Die innen durch den Wärmeträger nicht benetzten Dünnschicht-Elemente sind einander im trockenen Raum zugewandt, sodaß die Wärmeträgerflüssigkeit nicht das Dünnschicht-Fotomaterial chemisch angreifen kann.

Die Wahl von geeigneten Materialien für die Fotoelement-, wie auch des Glasmaterials hat eine ganz besondere Bedeutung. Man wird ein spektrales Glas mit einem spektralen Abschnitt verwenden, mit dem man die Photonen, die denn Fotozellenbetrieb dienen, spektral im Bereich von 800 uMeter und darunter bis herab zum UV-Bereich trennt, von den reinen Wärmewellen, die länger als 800 uM bis hinauf von 3000 uMeter sind. Die Oberfläche des spektralen Glases wird man im Wärmesperrbereich in einer reflektierenden, spiegelnden Schicht versehen. Auf diese trennt man die Licht-Photonen von den Wärmephotonen und erreicht, so 45 einen 2fachen Verwendungsbetrieb für Licht- und WärmeEnergie. Mittlerweise sind Dünnschichtmaterialien für einen Solarbetrieb verfügbar. Das sogenannte "Tripple-Zellen-Material", mit 3 speziellen Bereichen im UV-, grünen und unteren rot-Bereich, die sich im vorliegenden Falle ganz besonders eignen (z. B. Unisolar-Dünnschichtzellen).

### Zusatzeinrichtungen im Wärmekreislauf - Wärmepumpen

Es gibt eine weitere Möglichkeit den Wirkungsgrad dieser vorbeschriebenen Bautypen nach der Erfindung zu verbessern, indem man in dem Umlaufkreis der WärmeträgerFlüssigkeit (WKL), die in den Spiegel-Absorbem umläuft, ein oder mehrere Wärmepumpen (WP) einbindet. Solches hat den Vorteil, daß den Spiegel-Konstruktionen (**5, 6, 7**) nicht ein "kalter Wärmeträger" zugeführt wird, sondern ein bereits "vorgewärmtes Wärmeträger-Medium" WKL.

Von Bedeutung dabei ist, daß zunächst die Wärmepumpe das umlaufende Medium (WKL) vorerwärmt. Danach durchfließt das Wärmeträgermedium (WKL) die Vor-Absorber **(1-3, 1-6**) der Spiegelrinnen (**6-11**) und von diesen weitergeleitet, schließlich zum Mitten-Absorber (**6-14**) in der Hohlspiegelmitte. Hier zweigt die Leitung zur Dampfturbine (**T**) ab und kehrt an deren Ausgang dann endlich zum Wärmepumpenkreis WKL zurück.

Das Wämteträgermedium wird also in einem "geschlossenen" Kreis geführt, wobei sich seine Wärme von Durchlauf zu Durchlauf die Temperatur immer höherschraubt. Und zwar nicht nur im Spiegelwärme-Bereich, in den Spiegelabsorbern, sondern auch im Wärmepumpen-Bereich (WP).

Dabei wird sich mit der steigenden Zahl der Umläufe des flüssigen Wärmeträgers, sich das Trägermedium so hoch erwärmen, daß es schließlich in die Dampfphase übergeht und direkt eine Dampfturbine **T** anzutreiben vermag, an die der Elektro-Generator G angekoppelt ist.

Es beginnt im 1. Wärmepumpenkreis, dort wirkt zum erstenmal Erd-Wärme, nennen wir sie "Wärme I". Dann durchfließt das Wärmeträgermedium die Spiegel-Absorber (**1-3**, **1-6**), die Wärme an das Wärmeträgermedium übertragen, es ist die "Wärme II" und dann durchfließt das umlaufende Wärmeträgermedium WLK schließlich den den Mitten-Absorber des Hohl-Spiegels (**6-14**) dem "Nacherhitzer". Nennen wir seinen Umlauf "Wärme III". Je Umlauf wird dem Wärmeträger also 3 × Wärme, die Wärmearten 1 bis III, zugeführt, deren Wärme sich von Umlauf zu Umlauf immer weiter hochschaukelt. Die 3 Wärme-Aufbereitungen werden über Wärmeträger, Wärmepumpen, miteinander mittels vorhandener, natürlich vorhandene, ökologische Energiequellen verkettet.

Erst diese 3-malige Wärme-Addition im Wärmeträgermedium wird in unserer geografischen Lage eine vernünftige, und wirtschaftliche, sichere Nutzung der Sonnen-Energie bringen können.

Zweckmässigerweise wird man eine Turbinen-Bauform einsetzen, die sowohl als Flüssigkeits-Turbine, wie auch Dampf-Turbine einsetzen läßt.

Wesentlich ist, daß die Wärmeträger-Flüssigkeit Wasser sein kann; das im Laufe der ansteigenden Umlaufwärme, ab einer gewissen Umlaufzeit, je nach Sonnenwärme-Einfall in die Dampfphase übergeht.

Es gibt jedoch einige chemische Flüssigkeiten, die beide Zustände aufweisen können, Flüssigkeitsform oder Dampfform, die zudem noch den Vorteil der Frostsicherheit haben, was für den Winter von Vorteil ist.

Ist das Wärmeträgermedium Wasser, so kommen hier Warmwasser zu Heiß-Wasser-Wärmepumpen zum Einsatz. In der letzten Phase wird man ein Heißwasser-Wärmepumpe zu Dampfwärmepumpe. Aufgrund der steigenden Temperaturen, gerät das Wärmeträgermedium in die Dampfhase. Auch 2 Typen von Turbinen sind möglich.

Es ist noch kein Fall im Wärmepumpenbreich bekannt, daß eine Wärmepumpe einsetzt, bei dem der Temperaturunterschied zwischen Heißwasser zum heißen Wasserdampf zum Betrieb einer Wärmepumpe eingesetzt wird. Dies ist ein Novum und die erste Baukonstruktion, bei der eine solche, völlig neue Wärmepumpenbauart eingesetzt werden kann.

Es muß das Ziel sein, daß über den Wärmepumpenkreis angewärmtes Wärmeträgermedium möglichst nahe dem Übergang zur Dampfphase zu bringen. Unter solchen Aspekten kann es möglich sein, daß dieses Solar-Kraftwerk bereits unterhalb von einer Sonnenstrahlung, bis herunter von 300 Watt/m² wirksam zu betreiben.

Zwar wird diese "addierende" Zusatz-Sonnenstrahlung bei 300 Watt/m² noch nicht zur Dampfphase reichen, aber reicht gewiß zu einem heißen Umlauf des Wärmeträgers und kann die Turbine im Kraft-Motorbetrieb, den Generator noch anzutreiben. Unter gewissen Umständen - windarme Wetter-Zustände - mag dann bereits das diffuse Tageslicht + Wärmepumpenbetrieb ausreichen, bereits einen Elektro-Generator noch anzutreiben.

Auf jeden Fall aber reicht die Strömungs-Leistung aus, über die Motor-Turbine eine Wasserpumpe zu betreiben, die in dem einbezogenen Pumpspeicherwerk das Wasser von unteren Sammelbecken zum oberen Becken auf der Anhöhe hochpumpt.

Man wird dieser Kombinations-Bauform von Solar-, Wind- und Pumpspeicher- und Wärmepumpen-Kraftwerken deshalb in vorbeugender Weise mit umschaltbaren Turbinen für den Elektro-Generator ausführen. Eine Turbine für dem Umlauf "bei nichtdampfförmigen Medium" und eine für den "dampfförmigen Betrieb" des Wärmeträgermedium vorsehen.

In **Fig.** (10-) wird eine solche Anordnung als Anwendungsbeispiel gezeigt.

### Der entscheidende Schritt zum multiplen Solar-, Wärmepumpen-, Pumpspeicher-Kombinations-Kraftwerk

Eingangs wurde schon ausgeführt, daß nur eine hohe Verdichtung der Solar-Energie zu höheren Temperaturen im Wärmeträger-Kreislauf führen kann. Die Sonne scheint in unserer geografischen Lage nicht immer zu befriedigenden Temperaturen, um ein 1-MW-Kraftwerk solide zu betreiben. Man muß also nach neuen, zusätzlichen Methoden suchen, wie man dem Ziel durch Kombination mit anderen Mitteln dem Ziel nahe zu kommen kann.

Das kann durch eine zusätzliche Einfügung von Wärmepumpen in den Wärmeträger-Kreislauf geschehen.

Es wurde schön erwähnt, daß man eine Grundwasser-Wärmepumpe dazu benutzen kann, um den Wärmeträger vorzuwärmen, ehe er in das Solar-Spiegel-System eingeführt wird.

Es gibt aber zusätzliche Möglichkeiten, Wärmepumpen in den Nacherhitzerkreis (**6-14**) einzufügen. Ingesamt ist es möglich, in den Gesamt-Wärmeträgerkreis, 3 Wärmepumpen einzufügen, wobei man einen Pumpspeicherwerk-Betrieb einbezieht. In **Fig.** (10) ist eine solche, maximale Methode für den Wärmeträger dargestellt.

Man erkennt 3 Wärmepumpen, und zwar.
1) in Erd-Kreislauf (**10**-UE) der Wärmepumpe **1** zum Absorberkreis **(6-)** des Solar-Hohlspiegels (**6-5, 6, 7**), genutzt: Temperaturschritt: Erd-Kaltwasser zu Umlufttemperatur-Wasser.
2) im Spiegel-Absorberkreis (**8-1, 3)** zum Nacherhitzer-Kreis (**6-14**), genutzt, Umluft-Temperaturwasser zur Spiegel-Absorber-Temperatur,
3) im Nacherhitzer-Kreis (**6-14**) genutzt: Spiegel-Absorber-Temperatur zum Mittenabsorber.

Es besteht noch die Möglichkeit eine weitere, eine 4, Wärmepumpe zwischen den beiden Wasserbecken einzusetzen und zwar zwischen dem Berg-Wasserbecken (**40**-OE) und dem Tal-Wasserbecken (**10**-UE). Diese 4. Wärmepumpe kann aber nur dann angewendet werden, wenn zwisehen der Berg-Ebene und der Tal-Ebene der beiden Sammel-Becken ein genügender Höhen-Unterschied vorhanden ist, wobei dieses Mindest-Zwischengefälle mindestens 10 Meter betragen sollte. Etwa die übliche Zwischenhöhe, die bei Flußwasser-Kraftwerken üblich ist.

### Wärmepumpen zwischen den einzelnen Spiegelrinnen

Angenommen, man wählt einen Solar-Hohlspiegel mit einem Durchmesser von 50 Metern und die Spiegelrinnenzellen haben eine Breite von 1,5 Metern, dann können ca. 16 Ringe auf der Hohlspiegelfläche untergebracht werden. Verwendet man davon 8 Ringe für die 3fach-verdichtenden Spiegelzellen (...). so stehen die übrigen 8 Ringe für die Bestrahlung des Mitten-Absorber in der Brennlinie zur Verfügung, denn den Mitten-Absorber selbst, wird man die Mitte des Spiegels **(6-14)** freihalten müssen, wofür eine runde Platte von 2,5 Meter Durchmesser übrig bleibt. Der Spiegel hat also 16 Ringe. Zu erwähnen ist, daß der Hohlspiegel meist schräg zum Himmel steht, weil die Sonne in der Regel aus einem Winkel zwischen 45 und 60 Grad einfällt. Durch die Neigung erreicht der oberste Spiegelrand nur eine Höhe von ca. 40 Metern über dem Erdboden.

Das entspricht in etwa der Höhe von einem 10-stöckigen Miet-Wohnhaus oder Bürohauses, wie man sie an der Peripheric, meist Industrievierteln kleiner Gemeinden und Kleinstädten ohne Mühe finden kann.

Es sind also 8 Spiegelzellenringe von 1,5 Metern breite vorhanden, die sich mit 8 Zwischenspiegelflächen ohne Absorber abwechseln und letztere den Mittenabsorber heizen.

Nun kann die Absorberkreise der 8 Spiegelrinnen mit eingebautem Absorber jeweils mit dem benachbarten Ring durch Wärmepumpen verkoppeln.

Es wirken dann das Temperaturgefälle zwischen:
Ring **1** zu Ring **2**
Ring **2** zu Ring **3**
Ring **3** zu Ring **4**
Ring **4** zu Ring **5**
Ring **5** zu Ring **6**
Ring **6** zu Ring **7**
Ring **7** zu Ring **8**

Wir erkennen, daß man 7 Wärmepumpen benötigt, um die unterschiedlichen Temperaturen zwischen den Ringen, nutzen zu können.

Unterschiedliche Temperaturen sind mit Sicherheit vorhanden, weil die Spiegelrinnen zur Mitte des Spiegel hin, einen kleineren Durchmesser aufweisen, aber auch höhere Temperaturen bekommen, je näher sie sich der Spiegelmitte befinden.

Zählen wir nun die Wärmepumpen insgesamt zusammen, also auch die 3 Wärmepumpen im vorbeschrieben WärmeTräger Hauptkreis, der zur Turbine führt, hinzu, nämlich:
**1**. Erdkreis-Wärmepumpe **2**. Spiegelrinnen-Absorber-Wärmepumpe und schließlich **3**. die Mitten-Absorber-Wärmepumpe,
dann kommt man auf einen Einsatz von insgesamt 10 Wärmepumpen, wovon sich 3 im Hauptkreis im Hinlauf Turbine befinden, also außerhalb des Hohlspiegels befinden, während die 7 anderen Wärmepumpen sich an der Rückseite der Hohlspiegelschale, dort direkt angebaut wegen kurzer Leitungswege, befinden.

Geht man davon aus, daß jede der 10 Wärmepumpen eine Temperaturerhöhung zwischen 15 bis 20 Grad beiträgt, so erzielt man allein aus den Wärmepumpen: 10 × 15 Grad, eine Temperaturerhöhung von ca. 150 Grad im Endkreis-Wänneträger-Medium.

Hinzu die Effekte im Spiegelabsorber mit der 3fachen Verdichtung und im Mittenabsorber mit 1 : 1-Verdichtung, so kann man überschlägig erkennen, daß man in etwa eine Temperatur von ca. 450 Grad erreichen kann. Das ist bereits eine Dampfform. Nun wird in konventionellen Kraftwerken eine Dampftemperatur von 550 Grad gefahren. Dabei sind Stahlrohre bereits nahe der Rotglut. So hoch wird man hier den Dampf nicht fahren, weil das Kraftwerk einfach zu handhaben sein soll. Schließlich sollen umgeschulte Bauern sie einmal bedienen. Man sollte sich also auf eine maximale Dampftemperatur von ca. 400 Grad Wärmeträger-Temperatur einstellen,

Wer nun argumentiert: 10 zusätzliche Wärmepumpen seien übertrieben und kosten zu viel, der im!

Es sind sehr kleine Wärmepumpen, der Einkaufswert unter DM 10.000.- pro Stück, inclusive Zubehör beträgt. Der zugehörige Elektro-Motor des Verdichters in der Wärmepumpe liegt bei ca. 0,75 kW. Der Eigenstrombedarf aller 10 Verdichtermotoren liegt bei ca. 7,5 kWh.

Was bedeutet das schon gegenüber einer erzielbaren Leistung des Kraftwerks-Generators von ca. 1 MWh Leistung.

Große konventionelle Kraftwerke brauchen Saugzuggebläse, die bei einem 300-MW-Kraftwerk nicht selten bei 2.000 KW liegen. Kein Grund also, sich wegen eines abzuzweigenden Eigenstrombedarfes von 7,5 kWh aufzuregen. Es ist das übliche!

Der Einsatz dieser, verhältnismäßig 10 kleinen zusätzlichen Wärmepumpen ist aber in ihrer Wirkung sehr wichtig und bedeutend. Durch ihre Verkettung mit der beteiligten Solarwärme, kann die in unserer, geografischen, örtlichen Lage auf dem Globus dieser, unserer Welt, die reichlich schwach ankommende Solarenergie tatsächlich noch sinnvoll und wirtschaftlich genutzt werden. Ein MWh-Leistung, das ist etwas!

An dieser Stelle wird sofort klar, daß man das Kraftwerk weitgehend automatisieren muß. Am besten voll-computergesteuert. Deshalb geht das nachfolgende Kapitel darauf ein.

### Notwendige Automatisierung

Derartige hochtechnisierte Solarkraftwerke kann man bei dem gewaltigen Fortschritt, den die high-tec im letzten Jahrzehnt dieses Jahrhunderts machte, nicht in Handbetrieb, Steuern, Messen, Regeln, sondern eine Computer-SPS einsetzen. Da hier daran gedacht ist, daß Menschen aus der Landwirtschaft, weil sie das nötige Land dazu besitzen, diese Anlagen bedienen werden. Freilich kann man sie entsprechend nachschulen. Aber niemand verlangt. daß sie wegen eines 1 MW-Solarkraftwerkes mit ihrem Beruf aufhören sollen.

Das Solarkraftwerk sollte ein selbstüberwachendes System aus Computer und SPS erhalten. Der Bauer soll seiner üblichen Arbeit nachgehen. Man wird ihm einen Laptop-Computer mitgeben mit einem Funkkanal, der ca. 20 Kilometer empfangsbereit bleibt. Wenn man schon einen Laptop zur Fehleranzeige verwendann kann man auch einen ISDN-Telefonanschluß mit installieren und mit einen der MSR-und SPS-Lieferanten einen Fern-Service-Vertrag abschliessen. Die Fern-Diagnose und soweit möglich eine Reparatur durch Fern-Umsteuerung möglich ist, übernimmt die Fehlerbeseitigung.

Wo eine elektrische Beseitigung durch Wege-Umschaltungen nicht möglich sind und ganze Schaltungsplatinen und/oder Meßfühler, Begrenzungsschalter, Ventile, usw. gewechselt werden müssen, was der Funk-Laptop bereits dem Bauern vor Ort sogar bei der Arbeit, auf dem Felde, melden wird.

Auf Fern-Anleitung per Laptop wechselt der angelemte Bauer die notwendigen Teile vor Ort und nach erfolgten Wechsel, wird die Service-Ferndienst-Abteilung des Solarkraftwerksbauers. das örtliche Solarkraftwerk wieder anfahren. Man erreicht so eine optimale Betriebssicherheit.

Im Höchstgefahren-Falle kann eine automatisierte Schnellabschaltung vorgesehen werden, die das Solarkraftwerk herunterfährt.

Es wäre bcgrüßenswert, wenn sich mehrere Bauern zu einem örtlichen Zweckverband zusammenschliessen. Dann werden auch Kontrollgänge, die man zweifellos durchführen muß, auf eine größere Anzahl verfügbaren Personals verteilt. So kann ein Solarkraftwerk-Eigner auch einmal eine weitere Reise antreten ohne daß solches Probleme aufweist.

### Aufstellung vor Ort

Man kann die Hohlspiegel-Konstruktionen auf Gerüste stellen, die hoch genug sind, unterhalb der Konstruktion noch eine ungehinderte, landwirtschaftliche Nutzung der Flächen zuzulassen. Da das Vieh meistens nur im Frühling bis Herbst auf der Weide ist und Solar-Kraftwerke lautlos ar- 10 beiten, wird das weidende Vich in seinen Lebensgewohnheiten nicht gestört, wie etwa beim Betrieb eines Wind-Kraftwerkes. Auch die Vogel- und Insekten-Welt (Honigbienen) werden nicht gestört oder die freilaufenden Hühner.

### Resüme: eine Volkswirtschaftlich wertvolle Erfindung?

Warum gehen die Erfinder hierauf ein? Der bäuerliche Stand erleidet in unserem Lande, der Bundesrepublik, erhebliche Einbußen und muß subventioniert werden. Die aus dem Ausland eingeführten Produkte werfen die Bauern hier zu Lande meist preislich aus dem Markt. Das Volk wird über Steuern gezwungen den Bauernstand zu unterstützen, damit dieser überleben kann. Man kann einen über Generationen entstandenen Bauernstand nicht über Nacht abschaffen und es fragt sich, ob solches auch sinnvoll wäre. Die Natur kann umschlagen oder der Antransport von fernländischen Produkten fällt aus Unwettergründen aus, dann besinnt man sich wieder auf den eigenen Bauernstand. In den USA traten solche Situationen in mehreren Jahren hintereinander auf. Wohl dem Land, das seine Bauern erhalten hat und sie in seiner Nähe hätte. Wie hilft man nun den Bauernstand aus der gegenwärtigen Misere? Dem Bauernstand hilft eine gewisse Umstrukturierung. Wie etwa hier durch den Einsatz in einer ökologischen Stromversorgung im eigenen, klimatisch nicht besonders begünstigten, geografischen Ortslage. Der gemäßigten Zone auf der nördlichen Halbkugel unserer Erde.

Man kann den Bauernstand subventionieren - das ist verlorenes Geld. Man kann den Bauernstand ökologisch in die Stromerzeugung einbinden, wie durch die vorgeschilderten Kombination von Solar, Wind-, Pumpspeicher-Werken mit eingebundener Wärmepumpen-Vorwärmung geschehen kann. Freilich, einigen Aufwand muß man schon betreiben. Dann ist das Subventions-Geld nicht verloren, denn durch die Stromerzeugung verdient der Bauer wieder Geld und befreit den Staat und Volk von den Subventionen-Zahlungen.

Anfallenden Überschußstrom kann man in Gewächshausern nutzen oder Schwimmbäder im Winter heizen, um so dem Land-Tourismus zu stützen.

Aber, diese Klein-Kraftwerke schaffen auch Arbeitsplätze. Erstens bei der Herstellung der Bauteile, 2. bei der Montage und 3. in der Inbetriebhaltung.

Baut ein Bauer ein solches Klein-Kraftwerk bekommt er einen "zweiten" Beruf und da er nicht ausgebildet ist, muß er zumindest in der Bedienung angelernt werden.

Und dann gibt es da noch die vierte Arbeitsplatz-Beschaffung, nämlich die "turnusmäßige Wartung" und vielleicht 5. noch eine notwenige Buchhaltung (der Steuern wegen!).

Eine ganze Menge Arbeitsplatz-Beschaffung und das auf dem Lande, wo Arbeitssuchende kaum eine Stelle finden!

Und dann da noch die Computer! Der Netzverbund muß synchronisiert werden. Der Bauer ist kein Spezialist. Also müssen die Computer es automatisieren! Da lugt doch glatt noch ein weiterer Berufszweig hervor, der profitiert und die SPS-Anlagen mit Stepp 7. oder gar WIN CE. Arbeitsplätze in Hard- und Software. die 6. und 7. Arbeitsplätze!

### Was wird ein 1-MW-Solarkraftwerk kosten?

Um solches zu ermitteln, muß man zuerst prüfen, wieviel sich mit Solarstrom verdienen läßt.

Bei 10 Betriebsstunden am Tag ergibt das 10 MWh. Nehmcn wir an, daß man in 6 Monaten Strom erzeugen kann, dann kommt man bei 10.000 kWh/Tag, bei 180 Tagen auf eine Verfügbarkeit von 18 Mio kWh pro Saison, die man verkaufen kann. Kann der Betreiber den Strom für 6 Pfennig pro kWh verkaufen, so erzielt pro 6-Monate-Saison eine Einnahme von ca., 10,8 Mio DM.

Nehmen wir nun an, das Solarkraftwerk kostet 20 Mio DM, dann muß der Betreiber Zinsen und Amortisation auf diese 20 Mio DM bezahlen. Bekommt er das Kapital für 5% jährlichen Zinsen und rechnet für die Amortisation etwa 1,5%, dann muß er für die 20 Mio DM investiertes Kapital, einen Abzahlungsbetrag von DM 1,3 Mio jährlich aufbringen, um den Kreditdienst zu erfüllen. Da er bei günstigem Sonnenanfall eben diese 10,8 Mio DM Einnahmen erreichen kann, wäre die Rückzahlung kein Problem. Rechnen wir aber vorsichtigerweise nur mit der Hälfte. Dann nimmt der Betreiber immer noch etwa 5 Mio DM pro Jahressaison ein. Betrieb und Wartung sowie auch Personal und auch der Staat will Steuern, so kann ihm letztlich doch ein Endbetrag von "geschätzten" 0,5 bis ein Mio DM übrig bleiben, je nach Witterung und je nachdem, wie clever er sein Solarkraftwerk führt.

Diese einfache, überschlägige, Wirschafts-Bilanzbetrachtung zeigt, daß ein Solarkraftwerk ein ganz solides Unternehmen sein kann. Zweifellos muß die Wirtschaftlichkeit noch wesentlich genauer ermittelt werden. Aber gur einer Beurteilung, ob es lohnt "das Unternehmen SOLAR-KRAFTWERK anzupacken", reichen diese Überlegungen aus.

Mehr müssen die Erfinder auch zunächst nicht nachweisen!

Für die Fertigung gibt es ein Limit: mehr wie 20 Mio DM darf das 1-MW-Solarkraftwerk nicht kosten. Aber das wird erreichbar sein.

### SOLARKRAFTWERK - ZEICHNUNGEN

Erläuterungen: Die Zahlen vor den Bindestrich geben die Nummer der Figur an. Die Zahlen oder Buchstaben nach dem Bindestrich geben die einzelne Position in der Figur an.
**Fig. 1** verdichtende Kollektorzelle A, B, C, D Strahlengänge der einfallenden Solarstrahlung zum und im Kollektor Bauteile des Kollektors
   **1** Planspiegel
   **2** Isolierkörper
   **3** Absorberplatte
   **4** Absorber-Glasscheiben
   **5a** und **b** innere Kollektor-Glasscheiben
   **6** Durchflußraum des Wärmeträgers im Absorber
   **7** Luftraum im Kollektor
   **8** gesonderter Durchflußraum Laser-Resonator
   **9** innerer Trennscheiben am Laser-Resonator
   **10** doppelseitige Solarelemente im Absorber
   **11** Glasfenster irn Isolierkörper
   GZ = Grundspiegelzelle, SDR = Spiegelrinne,
   SRW = Spiegelinnenwände.
**Fig.** 2 Verschiedene Baubeispiele des Absorber-Aufbaues **2a** bis **2c** mit Trennscheiben-Anordnungen Bauteile wie Pos. 1. KZ = Kollektorzelle.
**Fig.** 3 Beispiel des Aufbaues einer Kollektorenwand (Wandfläche und Schnitt).
**Fig.** 4 Beispiel einer nachdrehbaren Kollektorenwandanordnung.
**Fig. 5** Beispiel eines Hohlspiegel-Solarkraftwerkes mit Kollektoren und planen Zwischenspiegeln.
   KZ = Kollektorzelle, PLSP = Planspiegel,
**Fig. 6** Beispiel eines Hohlspiegel-Solarkraftwerkes mit Kollektoren und parabolen Zwischenspiegeln.
**Fig. 7** Anordnung eines Hohlspiegel-Solarkraftwerkes mit Verstelleinrichtung zur Sonnennachführung.
**Fig.** 8 Anordnung von zusätzlichen Wärmepumpen zischen den Kollektorringen der Hohlspiegel.
**Fig.** 9 Schema einer Wärmepumpen-Anordnung für ein Hohlspiegel-Solarkraftwerk.
   T = Turbine, G = Elektrogenerator, P = Pumpe M = Motorventil, WP = Wärmepumpe, WT = Wärmetaucher, AB = hintereinander geschaltete Absorber zwischen den Hohlspiegel-Kollektoren. SAB = Säulenabsorber (Spiegelmitte) ELM = Elektro-Solarelemente, WKL- Wärmeträger-Kreislauf, KT = Kühlturm, SKV = Hohlspiegel-Kippvorichtung.
**Fig.** 10 Kombination eines Hohlspiegel-Solarkraftwerkes mit zusätzlichen Pumpspeicherbecken,
   HKW = Hohlspiegel-Solarkraftwerk, BE = Bergebene OE = obere Geländeebene, UE = untere Geländeebene, D = Druckwasscrleitung zur Turbine, WP = Wärmepumpe, P = Pumpe, MP = Motordruckpumpe, GH = Generatorhaus, G = Generator, WZ = Wärmezuleitung zu den Hohlspiegel-Wärmeabsorbern im HKW,

## Patentansprüche

1. Multiples SOLAR-, Wärmepumpen-, Pumpspeicher-Kombinations-KRAFTWERK, **dadurch gekennzeichnet, daß**:
zwei Planspiegelflächen (**1-1**) in einem 90-Grad-Winkel zusammen montiert werden, die auf die Sonne ausgerichtet werden und auf deren einer der beiden Spiegelflächen ein Absorber (**3,6**) aufgebaut ist, der durch die an den Spiegelflächen (**1-1**) umgelenkten Sonnenstrahlen auf den Wegen A, B, C und D, bestrahlt, die Wärme an die, in seinem Inneren (**1-7**) befindliche Wärme-Prallplatte (**1-3, 1-6**) abgibt, die ihrerseits die Solarwärme an den Wärmeträgerkreis (I-III) weitergibt und ein durchfließen des Trägermedium (WKL) aufheizt, wobei durch die Kraft des durchfließenden Medium hohe Hitzegrade entstehen, die eine Strömungskraft hervorbringt und die strömungskraft dazu benutzt wird eine Turbine (T) anzutreiben, an die ein Elektro-Generator (G) zur Strorn-Erzeugung angeschlossen ist, wobei nicht nur ein Spiegelflächen-Paar benutzt wird, sondern einer großen Zahl solcher, Einzel-Spiegelzellen (S-1/10) genannt, die zu einer mosaikförmigen Groß-Platte (**3-**) oder in einer Hohlspiegelform großen Durchmesser s zusammen-montiert werden und dem Sonnenstand, drehbar nachgeführt werden können, wobei in den Mosaik-Spiegel-Plattformen (**3-**) in fortlaufenden Reihen, bei der Hohlspiegel-Bauform (**3-**) zu einer großen Empfangsfläche zusammengefügt werden und der flüssige, umlaufende Wärmeträger (WKL) mehrfach und stufenweise, nacheinander je nach Länge des Umlaufes und je Umlauf sich die Temperatur des Wärmeträgers weitersteigert, bis der Wärmeträger in die Dampfphase übergeht und zum Antrieb einer Flüssigkeits- oder Dampf-Turbine nutzbar ist.

2. Wie Anspruch 1 und folgenden. **dadurch gekennzeichnet, daß**:
in einer Zusammenbauform mit wechselweise Hohlspiegeln, mit eingebauten Absorbern, sowie ohne Absorber verwendet werden, die Solarwärme der beiden Spiegelarten auf einen zusätzlichen Mitten-Absorber (**6-14**) in der Mitten-Brennachse (SAB) des Hohlspiegels (**5, 6, 7, 8**) als Nacherhitzer-Absorber (**6-14**) angeordnet ist.

3. Wie Anspruch 1 und folgenden, **dadurch gekennzeichnet, daß**:
die Wärmeträger-Flüssigkeit (WKL) durch Verwendung von einer, oder mehrerer Wärmepumpen (WP) in ihrem Kreislauf in 1 bis 4 Wärmepumpen (WP1 bis WP4) vor- und zwischen-erwärmt wird, sodaß alle 1 bis 4 Wärmepumpen auf getrennte und/oder gleiche Wärmeträger-Flüssigkeit wirken und zwar:
Kreis **1**:
durch Verwendung von Temperatur-Unterschieden von der Erdwärme oder Wasserbecken-Wärme zur Lufttemperatur oder der Wärmeträger-Temperatur, im Einlauf zum Turbinen-Kreislauf (WKL),
Kreis **2**:
durch Verwendung von Temperatur-Unterschieden des Wänneträgers Kreis **1** (WP1) zum Kreislauf **2** der Absorberwärme (WP2) in den Winkelspiegelrinnen-Absorber (SAB) und
Kreis **3**:
durch Verwendung von Temperatur-Unterschieden des Absorber-Kreises **2** zum Kreis **3,** dem Nach-Erhitzer-Absorber (SAB).
wobei der 1. Wärmepumpen-Kreis den zweiten aufheizt, der 2. Wärmepumpen-Kreis den 3. Wärmeträger-Kreis aufheizt und in die Generator-Turbine (T) cinströmt.

4. Wie Anspruch 1 und folgenden, **dadurch gekennzeichnet, daß**:
der Zusammenbau der Spiegelzellen-Hohlspiegel, (**5**, **6, 7**)
1. in Treppen-, bzw. Stufen-Form (**5, 6**) erfolgt oder:
2. in einer kugelschalen- oder parabolischen Spiegelform **(6)** erfolgt,
3. oder durch parabolische und Winkelspiegel im Wechsel (**7, 8**) erfolgt,
4. wechselnd mit 2 nebeneinander liegenden oder mehreren Spiral-Schnecken-Windungen (**7, 8**) erfolgt.

5. Wie Anspruch 1 und nachfolgenden, **dadurch gekennzeichnet, daß**:
eine Kombination von Solar-Hohl- oder Platten-Spiegeln in einer mehrfach verdichtenden, vorbeschriebenen Konstruktions-Bauweise mit Wärmepumpen ergänzend funktionell so zusammengefügt werden, daß sie wechselseitig ein einkreisiges oder mehrkreisiges Wärmeträgermedium bis zur Dampfform erhitzt, durch das eine Turbine mit Elektro-Generator angetrieben werden kann.

6. Wie Anspruch 1 und nachfolgenden, **dadurch gekennzeichnet, daß**:
Absorber (**3**) benutzt werden, die wie ein optischer Resonator (Fabry-Perot-Prinzip) aufgebaut sind, wobei ein Absorbergehäuse mit Glasseitenwänden oder Solarstrahlungs-durchlässigen Kunst- oder Keramik-Stoffen verwendet wird, das von einer optisch, anregbaren LASER-Flüssigkeit durchflossen wird, die durch gelenkte Solarstrahlung (A. B, C. D) erwärmt wird und gleichzeitig als flüssiger Wärmeträger für weitere Wärmenutzungen dient und das Absorber-Rahmengehäuse () so in seinen räumlichen Abmessungen ausgelegt wird. daß es in bestimmten, optischen Wellenlängen 3fach dimensional schwingen kann, wobei als Resonator-Reflektoren, Photoelement-Material verwendet wird, das von der Solarwärme sowohl direkt, und/oder von der in Schwingung gebrachten LASER-Flüssigkeit zusätzlich bestrahlt wird, sodaß im Photo-Element-Material eine Anregung des Photonenflusses erfolgt, die zu einer erhöhten Photonen-Ausbeute durch zusätzlich, schwingende Photonen hervorgebracht werden, die zu höheren Wirkungsgraden, als zur Zeit bekannt (04. 1999), führen.

7. Wie Anspruch 1 und nachfolgenden, **dadurch gekennzeichnet, daß**:
im Absorber (**3**) zusätzlich Ultraschallschwinger, oder auf anderen Wellenlängen schwingende Körper angebracht werden, die auf das Photoelement-Material innerhalb des Absorberkörpers und die darin befindliche, optische LASER-Flüssigkeit einwirken und eine erhöhte Photonen-Mobilität hervorrufen, sodaß eine höhere Photonen-Ausbeute hervorgerufen wird.

8. Wie Anspruch 1 und nachfolgenden, **dadurch gekennzeichnet, daß**:
das im Absorber (**3**) befindliche Photo-Element-Material in seinen körperlichen Abmessungen optisch so ausgebildet wird, daß es als Stab- oder Platten-LA-SER-Körper wirksam wird und der Solarstrahlung, wie auch der Flüssigkeitsstrahlung im Absorber (3) ausgesetzt wird.
